(19) Europäisches Patentamt
European Patent Office
Office européen des brevets

(11) **EP 2 408 250 A1**

(12) **EUROPEAN PATENT APPLICATION**
published in accordance with Art. 153(4) EPC

(43) Date of publication:
**18.01.2012 Bulletin 2012/03**

(51) Int Cl.:
*H04W 72/12* (2009.01)   *H04B 1/707* (2011.01)
*H04J 11/00* (2006.01)   *H04W 72/04* (2009.01)

(21) Application number: **10750718.8**

(22) Date of filing: **03.03.2010**

(86) International application number:
**PCT/JP2010/053399**

(87) International publication number:
**WO 2010/103964 (16.09.2010 Gazette 2010/37)**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(30) Priority: **09.03.2009   JP 2009054901**

(71) Applicant: **NTT DOCOMO, INC.**
**Chiyoda-ku**
**Tokyo 100-6150 (JP)**

(72) Inventors:
• **OKUBO, Naoto**
  **Tokyo 100-6150 (JP)**
• **ISHII, Hiroyuki**
  **Tokyo 100-6150 (JP)**

(74) Representative: **HOFFMANN EITLE**
**Patent- und Rechtsanwälte**
**Arabellastraße 4**
**81925 München (DE)**

(54) **RADIO BASE STATION**

(57)    A base station according to the present invention includes: a PUSCH resource assignment unit (11A) configured to assign a PUSCH resource to a PUSCH of a mobile station (UE); a PHICH resource assignment unit (11B) configured to assign a first frequency direction resource and a first code direction resource to a PHICH, based on identification information of the PUSCH resource; and a notification unit (12) configured to notify, to the mobile station (UE), the PUSCH resource. When a usage situation of a code direction resource in the first frequency direction resource satisfies predetermined conditions, the PHICH resource assignment unit (11B) is configured to change a frequency direction resource and a code direction resource assigned to the PHICH from the first frequency direction resource and the first code direction resource to a second frequency direction resource and a second code direction resource.

FIG. 10

START — S101

DETERMINE DEFAULT CYCLIC SHIFT AMOUNT
PHICH WHEN UL SCHEDULING GRANT IS TRANSMITTED
→ $n_{DMRS} = 0$
PHICH WHEN INSTRUCTING RETRANSMISSION BY PHICH (NACK)
→ $n_{DMRS} = (n_{DMRS}$ NOTIFIED BY IMMEDIATELY CLOSE UL SCHEDULING GRANT OF IDENTICAL HARQ PROCESS)

ASSIGN RB INDEX HAVING THE SMALLEST PUSCH AND PHICH RESOURCE DETERMINED BY $n_{DMRS}$ TO EACH PHICH — S102

CALCULATION OF AVERAGE PHICH MULTIPLEX NUMBER   $N_{PHICH}^{group}$ : NUMBER OF PHICH GROUPS
S103 — $N_{tmp} = \left\lfloor \frac{N_{multiplexed}}{N_{PHICH}^{group}} \right\rfloor + 1$   $N_{multiplexed}$ : NUMBER OF PHICHS AT THE SUB-FRAME

FLAG = 0 — S104

S105 — IS EITHER CONDITION 1 OR CONDITION 2 SATISFIED IN RESOURCE ASSIGNMENT CONTROL DETERMINATION CONDITION? — NO

YES

FLAG = 1 — S106

S107 — FLAG = 1? — NO

YES

STOP

DETERMINE PHICH GROUP WITH THE HIGHEST PRIORITY AS "PHICH GROUP TO BE CHANGED" — S108

DETERMINE PHICH GROUP OF CHANGE DESTINATION — S109

TRANSIT PHICH ONE BY ONE FROM PHICH GROUP TO BE CHANGED TO PHICH GROUP OF CHANGE DESTINATION — S110

S111 — IS EITHER CONDITION 1 OR CONDITION 2 SATISFIED IN RESOURCE ASSIGNMENT CONTROL TERMINATION DETERMINATION CONDITION? — YES

NO

FLAG = 0 — S112

EP 2 408 250 A1

**Description**

**TECHNICAL FIELD**

The present invention relates to a radio base station.

**BACKGROUND ART**

In a mobile communication system of the LTE (Long Term Evolution) scheme defined in the 3GPP, a radio base station eNB is configured to transmit, to the mobile station UE, a transmission acknowledgement signal (ACK/NACK) for an uplink data signal, which has been transmitted by a mobile station UE via a PUSCH (Physical Uplink Shared Channel, an uplink data signal channel), via a PHICH, (Physical Hybrid-ARQ Indicator Channel, a transmission acknowledgement signal channel).

**SUMMARY OF THE INVENTION**

**PROBLEMS TO BE SOLVED BY THE INVENTION**

However, since a method for assigning resources to the PHICH is not defined in the 3GPP, it is probable that resources are not appropriately assigned to the PHICH in the above-mentioned mobile communication system.
Therefore, the present invention is intended to overcome the above-described problems. An object thereof is to provide a radio base station capable of appropriately assigning resources to PHICH.

**MEANS FOR SOLVING THE PROBLEM**

A first aspect of the present invention is summarized as a radio base station including: an uplink data signal channel resource assignment unit configured to assign an uplink data signal channel resource to an uplink data signal channel for transmitting an uplink data signal of a mobile station; a transmission acknowledgement signal channel resource assignment unit configured to assign a first frequency direction resource and a first code direction resource to a transmission acknowledgement signal channel for transmitting a transmission acknowledgement signal for the uplink data signal, based on identification information of the uplink data signal channel resource; and a notification unit configured to notify, to the mobile station, the uplink data signal channel resource, wherein when a usage situation of a code direction resource in the first frequency direction resource satisfies predetermined conditions, the transmission acknowledgement signal channel resource assignment unit is configured to change a frequency direction resource and a code direction resource assigned to the transmission acknowledgement signal channel from the first frequency direction resource and the first code direction resource to a second frequency direction resource and a second code direction resource.

**EFFECT OF THE INVENTION**

As described above, according to the present invention, it is possible to provide a radio base station capable of appropriately assigning resources to PHICH.

**BRIEF DESCRIPTION OF THE DRAWINGS**

[Fig. 1] Fig. 1 is a diagram showing the entire configuration of a mobile communication system according to a first embodiment of the present invention.
[Fig. 2] Fig. 2 is a functional block diagram of a radio base station according to the first embodiment of the present invention.
[Fig. 3] Fig. 3 is a diagram explaining a method by which a radio base station assigns PHICH resources according to the first embodiment of the present invention.
[Fig. 4] Fig. 4 is a diagram explaining the concept of a PHICH group used in a radio base station according to the first embodiment of the present invention.
[Fig. 5] Fig. 5 is a diagram explaining the concept of a PHICH sequence used in a radio base station according to the first embodiment of the present invention.
[Fig. 6] Fig. 6 is a diagram explaining a method by which a radio base station assigns PHICH resources according to the first embodiment of the present invention.

[Fig. 7] Fig. 7 is a diagram explaining a method by which a radio base station assigns PHICH resources according to the first embodiment of the present invention.

[Fig. 8] Fig. 8 is a diagram explaining a method by which a radio base station assigns PHICH resources according to the first embodiment of the present invention.

[Fig. 9] Fig. 9 is a diagram explaining a method by which a radio base station assigns PHICH resources according to the first embodiment of the present invention.

[Fig. 10] Fig. 10 is a flowchart showing the operation of a radio base station according to the first embodiment of the present invention.

[Fig. 11] Fig. 11 is a diagram explaining a method by which a radio base station assigns PHICH resources according to the first modification of the present invention.

## BEST MODES FOR CARRYING OUT THE INVENTION

(Configuration of mobile communication system according to first embodiment of the present invention)

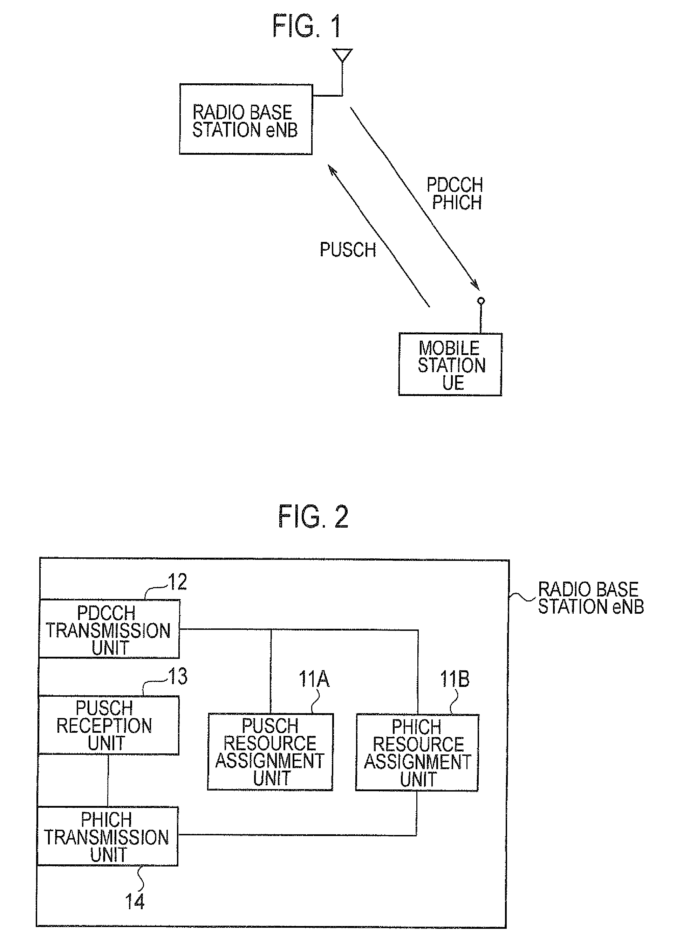

With reference to Fig. 1 through Fig. 9, the configuration of a mobile communication system according to a first embodiment of the present invention will be explained.

The mobile communication system according to the present embodiment is a mobile communication system of the LTE scheme. In the mobile communication system according to this embodiment, as illustrated in Fig. 1, a mobile station UE is configured to transmit an uplink data signal to a radio base station eNB via a PUSCH, and the radio base station eNB is configured to transmit a transmission acknowledgement signal (ACK/NACK) for the uplink data signal via a PHICH.

Further, the radio base station eNB is configured to transmit a downlink control signal to the mobile station UE via a PDCCH (Physical Downlink Control Channel).

As illustrated in Fig. 2, the radio base station eNB includes a PUSCH resource assignment unit 11A, a PHICH resource assignment unit 11B, a PDCCH transmission unit 12, a PUSCH reception unit 13, and a PHICH transmission unit 14.

The PUSCH resource assignment unit 11A is configured to assign a PUSCH resource (an uplink data signal channel resource) to the PUSCH.

For example, the PUSCH resource assignment unit 11A is configured to assign sub-frames as time direction resources or resource blocks (RBs) as frequency direction resources to the PUSCH.

Here, the resource block is configured by 7 ODFM symbols and 12 sub-carriers.

The PHICH resource assignment unit 11B is configured to assign resources including frequency direction resources and code direction resources to the PHICH.

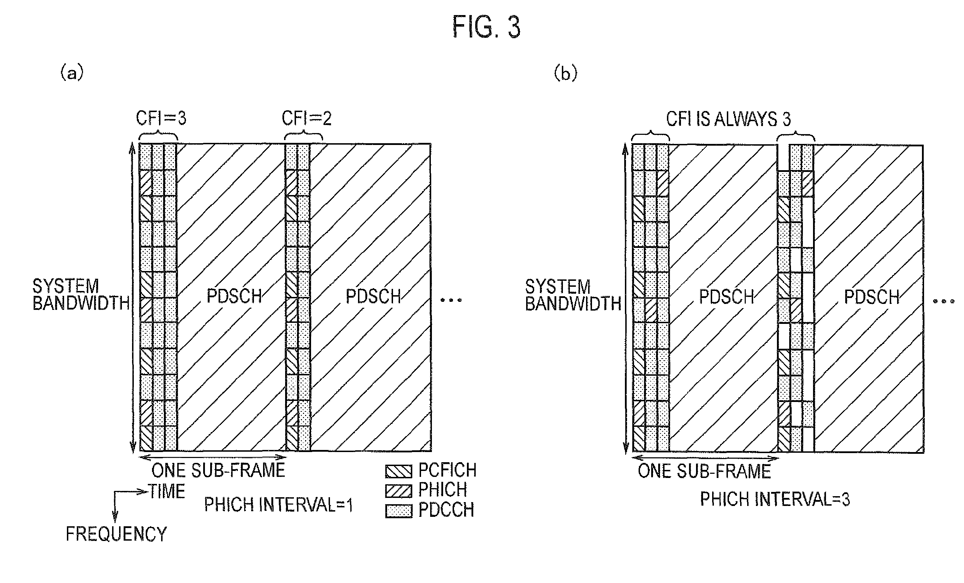

As illustrated in Fig. 3(a) and Fig. 3(b), the PHICH resource assignment unit 11B is configured to assign resources of one OFDM symbol (when a PHICH interval is 1, that is, in the case of normal duration) of a head of each sub-frame or three OFDM symbols (when a PHICH interval is 3, that is, in the case of extended duration) of a head of each sub-frame to the PHICH.

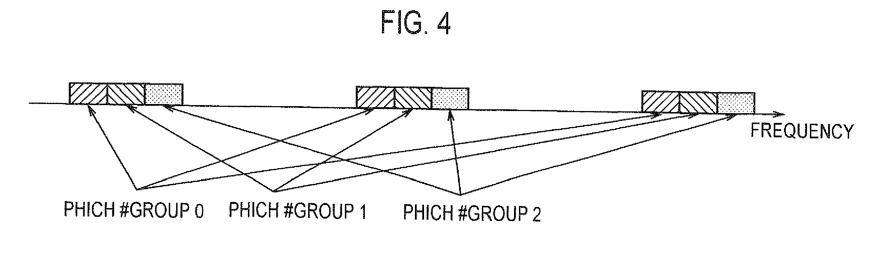

As illustrated in Fig. 4, frequency direction resources assignable to the PHICH are PHICH groups (transmission acknowledgement signal channel groups) including a plurality of resource element groups (e.g., three resource element groups).

Here, the resource element group (REG) is configured by four continuous resource elements (REs). Further, each resource element is configured by one OFDM symbol and one sub-carrier.

The number $N_{PHICH}^{group}$ of the PHICH groups is determined by (Equation 1).

[Equation 1]

$$N_{PHICH}^{group} = \begin{cases} \lceil Ng(N_{RB}^{DL}/8) \rceil & \text{(in the case of Normal Cyclic Prefix)} \\ 2 \cdot \lceil Ng(N_{RB}^{DL}/8) \rceil & \text{(in the case of Extended Cyclic Prefix)} \end{cases} \quad \text{---(Equation 1)}$$

Here, the $N_{RB}^{DL}$ is the number of resource blocks within a system bandwidth and $N_g$ is a parameter (e.g., 1/6, 1/2, 1, and 2) for determining the number of the PHICH groups.

For example, in the case in which the system bandwidth is "5 MHz" and a normal cyclic prefix is used, since the $N_{RB}^{DL}$ is "25", when $N_g$ is set to "1", the number of the PHICH groups is "4".

Further, in the case in which the system bandwidth is "20 MHz" and the normal cyclic prefix is used, since the $N_{RB}^{DL}$ is "100", when $N_g$ is set to "1/6", the number of the PHICH groups is "3".

Fig. 4 illustrates an example in which the number $N_{PHICH}^{group}$ of the PHICH groups is "3". Hereinafter, for the convenience sake, it is assumed that the number of the PHICH groups is "3" as an example.

It is noted that, as illustrated in Fig. 3(a) and Fig. 3(b), the PHICH groups are configured to be mapped over the entire system bandwidth at an approximately equal interval in order to obtain a frequency diversity gain.

Further, code direction resources assignable to the PHICH are orthogonal sequences (e, g., Walsh Hadamard sequences) within the PHICH groups.

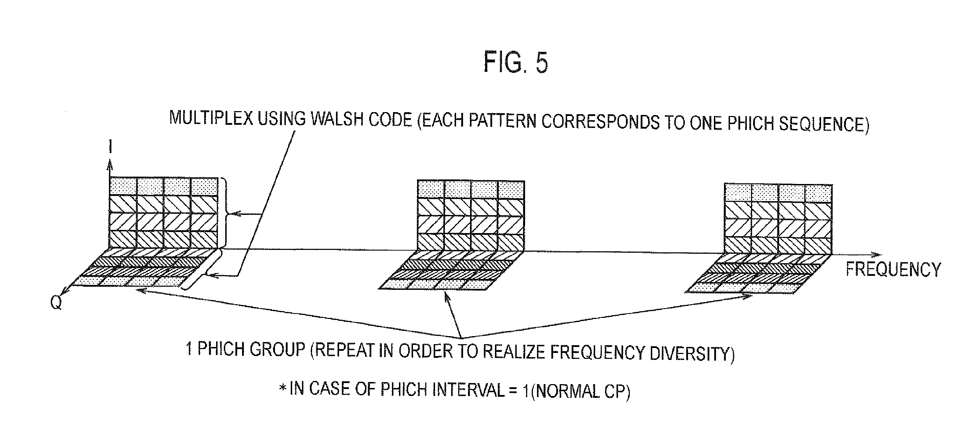

The orthogonal sequences (also called PHICH sequences) can be multiplexed in I and Q phases (I/Q multiplexing is possible) within the PHICH groups. Specifically, as illustrated in Fig. 5, $N_{SF}^{PHICH}$ PHICH sequences can be multiplexed respectively in the I and Q phases within the PHICH groups. For example, the $N_{SF}^{PHICH}$ is expressed by Equation 2 below.

$$[\text{Equation 2}]$$

$$N_{SF}^{PHICH} = \begin{cases} 4 & \text{(in the case of Normal Cyclic Prefix)} \\ 2 & \text{(in the case of Extended Cyclic Prefix)} \end{cases}$$

That is, resources (PHICH resources) assignable to the PHICH are specified by a PHICH group number for identifying the PHICH group and a PHICH sequence number for identifying the PHICH sequence.

Further, the PHICH resource assignment unit 11B is configured to assign a first frequency direction resource and a first code direction resource to the PHICH, based on resource block numbers (identification information of the uplink data signal channel resource) for identifying the resource blocks in the PUSCH resources.

Specifically, the PHICH resource assignment unit 11B determines resources to be assigned to the PHICH, based on the smallest resource block number (an RB index) of the resource block numbers for identifying the resource blocks assigned to the PUSCH as the frequency direction resources.

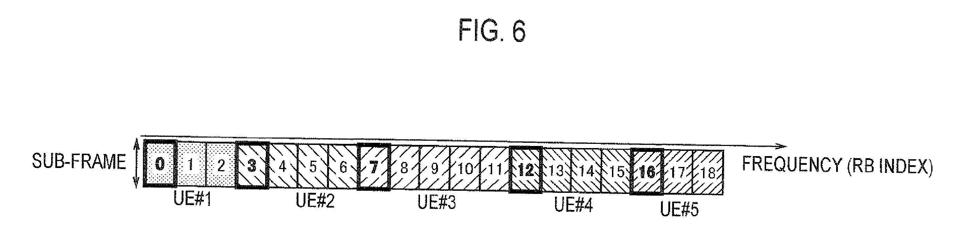

For example, as illustrated in Fig. 6, the PHICH resource assignment unit 11B determines resources to be assigned to the PHICH of mobile station UE#1 based on the smallest resource block number #0 of resource block numbers #0 to #2 for identifying resource blocks assigned to the PUSCH of the mobile station UE#1 as the frequency direction resources.

Further, the PHICH resource assignment unit 11B determines resources to be assigned to the PHICH of mobile station UE#2, based on the smallest resource block number #3 of resource block numbers #3 to #6 for identifying resource blocks assigned to the PUSCH of the mobile station UE#2 as the frequency direction resources.

Further, the PHICH resource assignment unit 11B determines resources to be assigned to the PHICH of mobile station UE#3, based on the smallest resource block number #7 of resource block numbers #7 to #11 for identifying resource blocks assigned to the PUSCH of the mobile station UE#3 as the frequency direction resources.

It is noted that the PHICH resource assignment unit 11B determines resources to be assigned to the PHICH of mobile station UE#4, based on the smallest resource block number #12 of resource block numbers #12 to #15 for identifying resource blocks assigned to the PUSCH of the mobile station UE#4 as the frequency direction resources.

Moreover, the PHICH resource assignment unit 11B determines resources to be assigned to the PHICH of mobile station UE#5, based on the smallest resource block number #16 of resource block numbers #16 to #18 for identifying resource blocks assigned to the PUSCH of the mobile station UE#5 as the frequency direction resources.

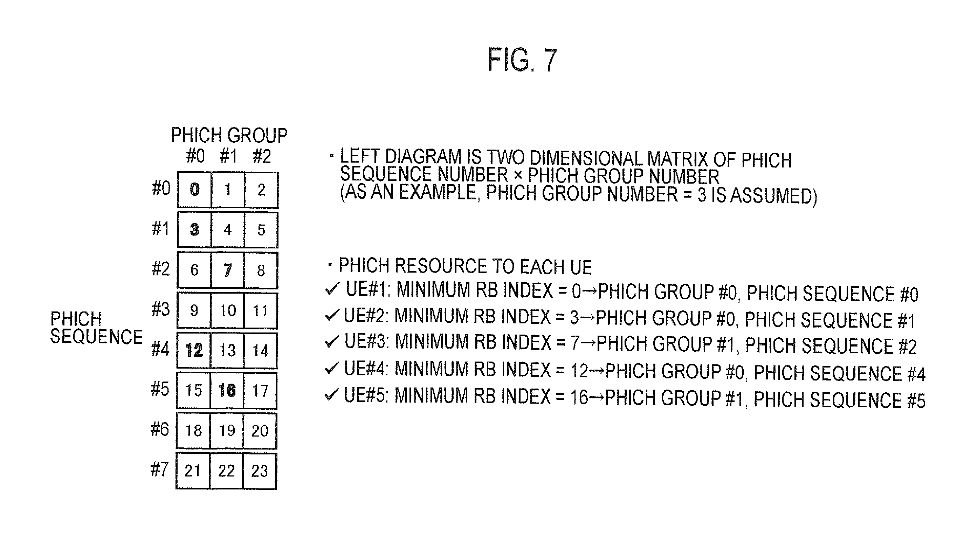

As illustrated in Fig. 7, the PHICH resource assignment unit 11B is configured to assign a PHICH group #0 and a PHICH sequence #0 corresponding to the resource block number #0 to the PHICH of mobile station UE#1 as the first frequency direction resource and the first code direction resource.

Further, the PHICH resource assignment unit 11B is configured to assign a PHICH group #0 and a PHICH sequence #1 corresponding to the resource block number #3 to the PHICH of mobile station UE#2 as the first frequency direction resource and the first code direction resource.

Further, the PHICH resource assignment unit 11B is configured to assign a PHICH group #1 and a PHICH sequence #2 corresponding to the resource block number #7 to the PHICH of mobile station UE#3 as the first frequency direction resource and the first code direction resource.

Moreover, the PHICH resource assignment unit 11B is configured to assign a PHICH group #0 and a PHICH sequence #4 corresponding to the resource block number #12 to the PHICH of mobile station UE#4 as the first frequency direction resource and the first code direction resource.

Moreover, the PHICH resource assignment unit 11B is configured to assign a PHICH group #1 and a PHICH sequence #5 corresponding to the resource block number #16 to the PHICH of mobile station UE#5 as the first frequency direction resource and the first code direction resource.

As described above, the resources (the PHICH groups and the PHICH sequences) assigned to the PHICH are configured to be determined based on the smallest resource block number of the resource block numbers for identifying the resource blocks assigned to the PUSCH.

However, the resources (the PHICH groups and the PHICH sequences) assigned to the PHICH can be changed by the cyclic shift index of a "demodulation reference signal" for demodulating a PUSCH signal (an uplink data signal) which can be notified via the PDCCH. It is noted that the above example has been explained based on the assumption that the cyclic shift index is "0".

Specifically, whenever the cyclic shift index is increased by "n", the PHICH group number and the PHICH sequence number are increased by "n".

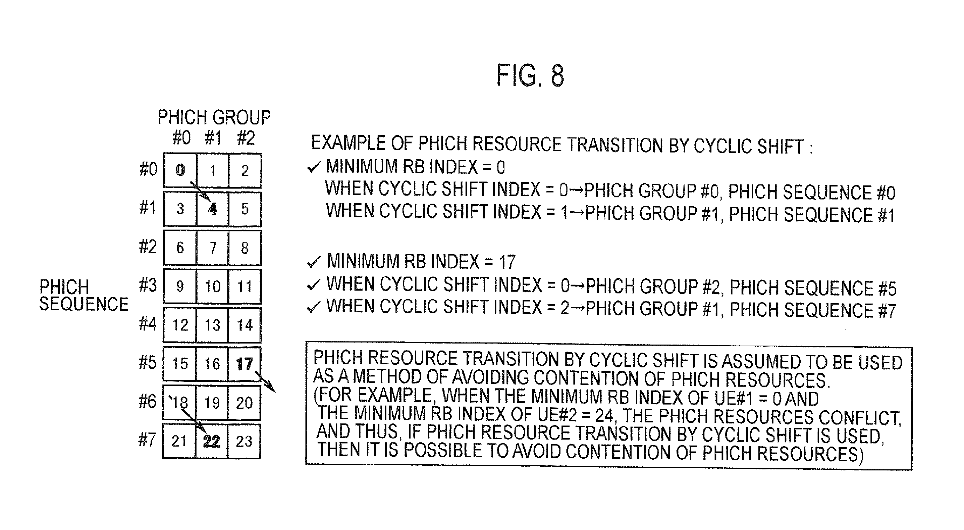

For example, as illustrated in Fig. 8, when the smallest resource block number of the resource block numbers for identifying the resource blocks assigned to the PUSCH is "0" and the cyclic shift index is "0", the PHICH group #0 and the PHICH sequence #0 are assigned to the PHICH.

On the other hand, when the smallest resource block number of the resource block numbers for identifying the resource blocks assigned to the PUSCH is "0" and the cyclic shift index is "1", the PHICH group #1 and the PHICH sequence #1 are assigned to the PHICH.

Further, when the smallest resource block number of the resource block numbers for identifying the resource blocks assigned to the PUSCH is "17" and the cyclic shift index is "0", the PHICH group #2 and the PHICH sequence #5 are assigned to the PHICH.

On the other hand, when the smallest resource block number of the resource block numbers for identifying the resource blocks assigned to the PUSCH is "17" and the cyclic shift index is "2", the PHICH group #1 and the PHICH sequence #7 are assigned to the PHICH.

The reason for changing the resources assigned to the PHICH using the cyclic shift as described above is for avoiding the situation (a contention of the PHICH resources) that one PHICH resource is assigned to a plurality of PHICHs.

For example, when the smallest resource block number of the resource block numbers for identifying the resource blocks assigned to the PUSCH of the mobile station UE#1 is "0" and the smallest resource block number of the resource block numbers for identifying the resource blocks assigned to the PUSCH of the mobile station UE#2 is "24", since the PHICH group #0 and the PHICH sequence #0 are assigned to both the PHICH of the mobile station UF#1 and the PHICH of the mobile station UE#2, it is possible to avoid a contention of PHICH resources by changing the PHICH resources using the cyclic shift.

Here, when the usage situation of the PHICH sequence (the code direction resource) in the PHICH group (the first frequency direction resource) satisfies predetermined conditions, the PHICH resource assignment unit 11B is configured to change the PHICH group and the PHICH sequence assigned to the PHICH from the first frequency direction resource and the first code direction resource to a second frequency direction resource and a second code direction resource by using the above-mentioned cyclic shift.

As illustrated in the example of Fig. 8, when the usage situation of the PHICH sequence (the code direction resource) in the PHICH group #0 (the first frequency direction resource) satisfies predetermined conditions, the PHICH resource assignment unit 11B may be configured to change the PHICH sequence in the PHICH group assigned to the PHICH from the PHICH sequence #0 (the first code direction resource) in the PHICH group #0 (the first frequency direction resource) to the PHICH sequence #1 (the second code direction resource) in the PHICH group #1 (the second frequency direction resource) by using the above-mentioned cyclic shift.

Further, as illustrated in the example of Fig. 8, when the usage situation of the PHICH sequence (the code direction resource) in the PHICH group #2 (the first frequency direction resource) satisfies predetermined conditions, the PHICH resource assignment unit 11B may be configured to change the PHICH group and the PHICH sequence assigned to the PHICH from the PHICH group #2 (the first frequency direction resource) and the PHICH sequence #5 (the first code direction resource) to the PHICH group #1 (the second frequency direction resource) and a PHICH sequence #7 (the second code direction resource) by using the above-mentioned cyclic shift.

Here, when the number of used PHICH sequences in a first PHICH group (e.g., the PHICH group #0) is equal to or more than a predetermined number, the PHICH resource assignment unit 11B may be configured to change the PHICH sequence in the PHICH group assigned to the PHICH from a first PHICH sequence (the PHICH sequence #0) in the first PHICH group (e.g., the PHICH group #0) to a second PHICH sequence (the PHICH sequence #1) in the second PHICH group (e.g., the PHICH group #1).

Further, when the PHICH sequence in the first PHICH group (e.g., the PHICH group #0) has been already assigned to another PHICH, the PHICH resource assignment unit 11B may be configured to change the PHICH sequence in the PHICH group assigned to the PHICH from the first PHICH sequence (the PHICH sequence #0) in the first PHICH group (e.g., the PHICH group #0) to the second PHICH sequence (the PHICH sequence #1) in the second PHICH group (e.g., the PHICH group #1).

It is noted that, when a plurality of first PHICH sequences to be changed as described above exist in the first PHICH group (e.g., the PHICH sequence #0 in the PHICH group #0 and the PHICH sequence #5 in the PHICH group #2), the PHICH resource assignment unit 11B may be configured to preferentially change the first PHICH sequence (e.g., the PHICH sequence #0 in the PHICH group #0) in the first PHICH group which has been already assigned to another PHICH.

Further, when a plurality of first PHICH sequences to be changed as described above exist in the first PHICH group (e.g., the PHICH sequence #0 in the PHICH group #0 and the PHICH sequence #5 in the PHICH group #2), the PHICH resource assignment unit 11B maybe configured to preferentially change the first PHICH sequence (e.g., the PHICH sequence #0 in the PHICH group #0) in the first PHICH group with the largest number of used PHICH sequences.

Further, when a plurality of first PHICH sequences to be changed as described above exist in the first PHICH group (e.g., the PHICH sequence #0 in the PHICH group #0 and the PHICH sequence #5 in the PHICH group #2), the PHICH resource assignment unit 11B maybe configured to preferentially change the first PHICH sequence (e.g., the PHICH sequence #0 in the PHICH group #0) in the first PHICH group in which a PHICH sequence has been multiplexed in I and Q phases.

Moreover, when a plurality of first PHICH sequences to be changed as described above exist in the first PHICH group (e.g., the PHICH sequence #0 in the PHICH group #0 and the PHICH sequence #5 in the PHICH group #2), the PHICH resource assignment unit may be configured to preferentially change the first PHICH sequence (e.g., the PHICH sequence #0 in the PITCH group #0) in the first PHICH group with the largest total value of transmission power.

Further, the PHICH resource assignment unit 11B may be configured to set a PHICH group (e.g., the PHICH group #1) with the smallest total value of transmission power as a PHICH group (the second PHICH group) of the above-mentioned change destination.

It is noted that when having changed the first PHICH sequence in the first PHICH group, the PHICH resource assignment unit 11B may be configured to prevent a PHICH group, in which I/Q multiplexing of a PHICH sequence occurs, from being set as a PHICH group (the second PHICH group) of the above-mentioned change destination.

Further, when having changed the first PHICH sequence in the first PHICH group, the PHICH resource assignment unit 11B may be configured to prevent a PHICH group, in which there occurs a contention to the PHICH sequences having been already assigned to another PHICH, from being set as a PHICH group (the second PHICH group) of the above-mentioned change destination.

The PDCCH transmission unit 12 is configured to transmit a downlink control signal to the mobile station UE via the PDCCH.

Specifically, the PDCCH transmission unit 12 is configured to transmit an uplink scheduling signal "UL scheduling grant" to the mobile station UE via the PDCCH.

For example, the PDCCH transmission unit 12 is configured to notify, to the mobile station UE, the PUSCH resources (e.g., sub-frames, resource blocks, a modulation scheme, and a coding rate), which has been assigned by the PUSCH resource assignment unit 11A, through the uplink scheduling signal "UL scheduling grant".

Further, the PDCCH transmission unit 12 may be configured to notify, to the mobile station UE, the PHICH group (the second frequency direction resource) and the PHICH sequence (the second code direction resource) which have been changed by the PHICH resource assignment unit 11B.

Specifically, when the PHICH group and the PHICH sequence have been changed by the cyclic shift, the PDCCH transmission unit 12 may be configured to notify, to the mobile station UE, the cyclic shift index through the uplink scheduling signal "UL scheduling grant".

The PUSCH reception unit 13 is configured to receive the uplink data signal transmitted by the mobile station UE via the PUSCH.

The PHICH transmission unit 14 is configured to transmit a transmission acknowledgement signal (ACK/NACK) for the uplink data signal received in the PUSCH reception unit 13 to the mobile station UE.

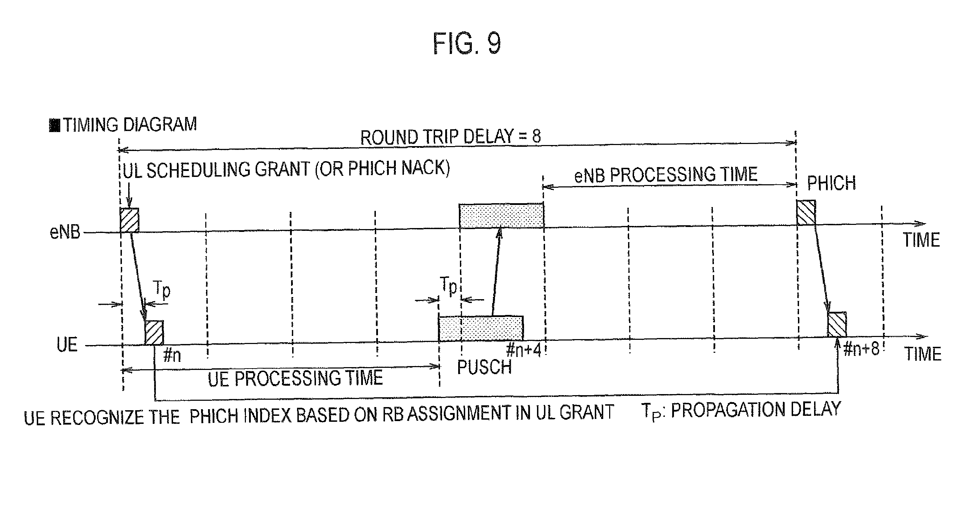

For example, as illustrated in Fig. 9, at a sub-frame #n, the PDCCH transmission unit 12 transmits the uplink scheduling signal "UL scheduling grant" to the mobile station UE via the PDCCH.

At the time of retransmission of the uplink data signal, when it is not necessary to transmit the uplink scheduling signal "UL scheduling grant", the PHICH transmission unit 14 transmits the NACK to the mobile station UE via the PHICH at the sub-frame #n.

At a sub-frame #n+4, the PUSCH reception unit 13 receives the uplink data signal, which has been transmitted by the mobile station UE via the PUSCH, according to the uplink scheduling signal "UL scheduling grant".

At a sub-frame #n+8, the PHICH transmission unit 14 transmits the transmission acknowledgement signal (ACK/NACK) for the uplink data signal received in the PUSCH reception unit 13 to the mobile station UE via the PHICH.

Thus, in consideration of the resource blocks assigned to the PUSCH for transmitting the uplink data signal to be transmitted by the mobile station UE at the sub-frame #n+4, the PHICH resource assignment unit 11B determines resources to be assigned to the PHICH for transmitting the transmission acknowledgement signal at the sub-frame #n+8.

It is noted that, at the sub-frame #n, the PDCCH transmission unit 12 notifies, to the mobile station UE, a cyclic shift index used for determining the PHICH resources.

(Operation of mobile communication system according to first embodiment of the present invention)

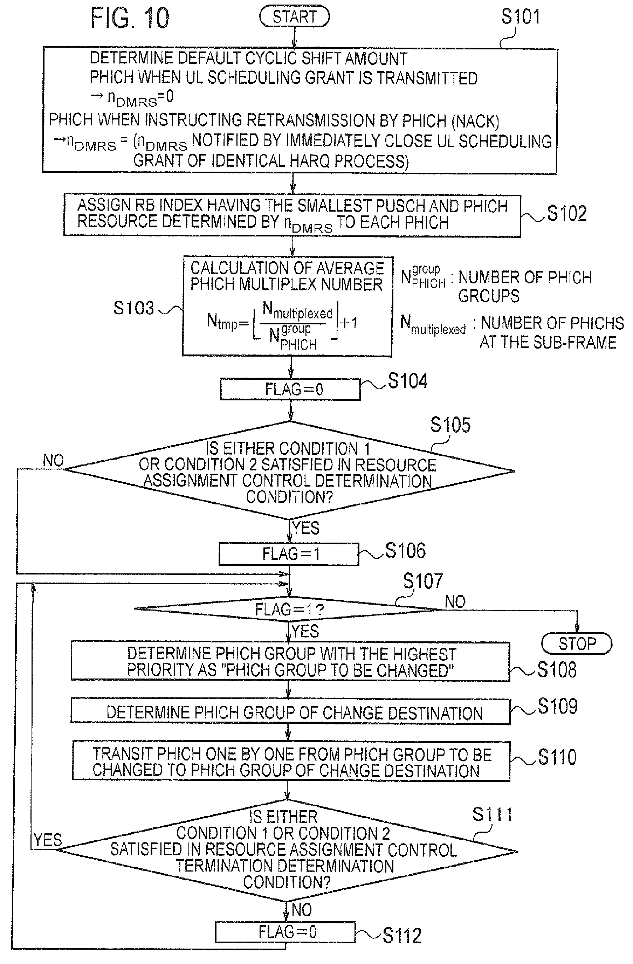

With reference to Fig. 10, the operation of the mobile communication system according to this embodiment, specifically, the operation of the radio base station eNB according to this embodiment will be explained, below.

As illustrated in Fig. 10, in step S101, the radio base station eNB determines a default cyclic shift index (a cyclic shift amount) .

Here, a cyclic shift index $n_{DMRS}$ when an uplink data signal is initially transmitted (i.e., when an uplink scheduling signal "UL scheduling grant" is transmitted) is "0", and a cyclic shift index $n_{DMRS}$ when the uplink data signal is retransmitted is the same as a cyclic shift index $n_{DMRS}$ notified through the uplink scheduling signal "UL scheduling grant" very close to the same HARQ process.

In step S102, the radio base station eNB assigns PHICH resources (a PHICH group and a PHICH sequence) determined based on the smallest resource block number of resource block numbers for identifying resource blocks assigned to the PUSCH and the cyclic shift index $n_{DMRS}$ determined in step S101 to each PHICH.

In step S103, the radio base station eNB checks the number of used PHICH sequences (the number of multiplexed PHICH sequences) in each PHICH group, and calculates an average value $N_{tmp}$ of PHICH sequences used in each PHICH group using (Equation 3) below.

[Equation 3]

$$N_{tmp} = \left\lfloor \frac{N_{multiplexed}}{N^{group}_{PHICH}} \right\rfloor + 1$$

In Equation 3, the $N_{PHICH}^{group}$ is the number of PHICH groups and the $N_{multiplexed}$ is the number of PHICHs to which resources are assigned at a corresponding sub-frame.

In step S104, the radio base station eNB sets a flag to "0".

In step S105, the radio base station eNB determines whether any one of condition 1 and condition 2 is satisfied in resource assignment control determination conditions.

Here, the condition 1 is that "there exists a PHICH group in which the number of used PHICH sequences in the PHICH is equal to or more than $N_{tmp}$ and there exists a PHICH group in which the number of used PHICH sequences in the PHICH is equal to or less than $(N_{tmp}-2)$".

Further, the condition 2 is that "there exists a PHICH group in which a contention of PHICH resources occurs at the time of step S101, that is, there exists a PHICH group in which the same PHICH sequence is assigned to a plurality of PHICHs".

In the case of "YES" in step S105, the operation proceeds to step S106. In the case of "NO" in step S105, the operation proceeds to step S107.

In step S106, the radio base station eNB sets the flag to "1".

In step S107, the radio base station eNB determines whether or not the flag has been set to "1".

In the case of "YES" in step S107, the operation proceeds to step S108. In the case of "NO" in step S107, the operation ends.

In step S108, the radio base station eNB determines a PHICH group to be changed based on the priority of each PHICH group.

Here, the priority of a PHICH group in which there occurs a contention of PHICH resources is set to "1", the priority of a PHICH group in which the number of used PHICH sequences is the largest and I/Q multiplexing of PHICH sequences is performed is set to "2", and the priority of a PHICH group in which the number of used PHICH sequences is the largest and the I/Q multiplexing of the PHICH sequences is not performed is set to "3".

Further, when there exist a plurality of PHICH groups with the highest priority, the radio base station eNB may set a PHICH group with the largest total value of transmission power as a PHICH group to be changed.

Here, when there exist a plurality of PHICH groups with the highest priority and a plurality of PHICH groups with the largest total value of transmission power, the radio base station eNB may set a PHICH group with the smallest PHICH group number as a PHICH group to be changed.

In step S109, the radio base station eNB determines a PHICH group of a change destination.

For example, the radio base station eNB may determine a PHICH group with the smallest number of used PHICH sequences as the PHICH group of the change destination.

Here, when having changed the PHICH sequences in the PHICH group to be changed, the radio base station eNB may not determine a PHICH group, in which there occurs a contention to PHICH sequences (contention of PHICH resources) having been already assigned to another PHICH, as the PHICH group of the above-mentioned change destination.

Further, when having changed the PHICH sequences in the PHICH group to be changed, the radio base station eNB may not determine a PHICH group, in which the I/Q multiplexing of the PHICH sequences occurs, as the PHICH group of the above-mentioned change destination.

Further, when there exist a plurality of PHICH groups with the smallest number of used PHICH sequences, the radio base station eNB may determine a PHICH group with the smallest total value of transmission power as a PHICH group of a change destination.

Moreover, when there exist a plurality of PHICH groups with the smallest number of used PHICH sequences and a plurality of PHICH groups with the smallest total value of transmission power, the radio base station eNB may determine a PHICH group with the smallest PHICH group number as a PHICH group of a change destination.

In step S110, the radio base station eNB changes the PHICH resource from a PHICH group to be changed to a PHICH group of a change destination one by one.

In step S111, the radio base station eNB determines whether any one of condition 1 and condition 2 is satisfied in resource assignment control termination determination conditions.

Here, the condition 1 is that "there exists a PHICH group in which the number of used PHICH sequences in the PHICH is equal to or more than $N_{tmp}$, there exists a PHICH group in which the number of used PHICH sequences in the PHICH is equal to or less than ($N_{tmp}$-2), and there exists a PHICH group which can be a PHICH group of a change destination".

Further, the condition 2 is that "there exists a PHICH group in which a contention of PHICH resources occurs, that is, there exists a PHICH group in which the same PHICH sequence is assigned to a plurality of PHICHs, and there exists a PHICH group which can be a PHICH group of a change destination".

In the case of "YES" in step S111, the operation returns to step S107. In the case of "NO" in step S111, the operation proceeds to step S112.

In step S112, the radio base station eNB sets the flag to "0".

(Operation and Effect of mobile communication system according to first embodiment of the present invention)

In accordance with the mobile communication system according to the first embodiment of the present invention, the radio base station eNB changes PHICH resources determined based on both the smallest resource block number of resource block numbers for identifying recourse blocks assigned to PUSCH and a default cyclic shift index by using cyclic shift, so that it is possible to avoid a contention of the above-mentioned PHICH resources.

Further, in accordance with the mobile communication system according to the first embodiment of the present invention, when many PHICH sequences are used in each PHICH group, the radio base station eNB changes the PHICH resources determined based on both the smallest resource block number of the resource block numbers for identifying recourse blocks assigned to the PUSCH and the default cyclic shift index by using the cyclic shift, so that it is possible to reduce the amount of inter-code interference in a PHICH group, in which a PHICH sequence has been multiplexed, by using orthogonal codes.

Further, in accordance with the mobile communication system according to the first embodiment of the present invention, when many PHICH sequences are used in each PHICH group, the radio base station eNB changes the PHICH resources determined based on both the smallest resource block number of the resource block numbers for identifying recourse blocks assigned to the PUSCH and the default cyclic shift index by using the cyclic shift, so that it is possible to allow transmission power in resource elements to be in a defined range.

In accordance with the mobile communication system according to the first embodiment of the present invention, when I/Q multiplexing is performed in each PHICH group, the radio base station eNB changes the PHICH resources determined based on both the smallest resource block number of the resource block numbers for identifying recourse blocks assigned to the PUSCH and the default cyclic shift index by using the cyclic shift, so that it is possible to reduce the influence of interference caused by the collapse of orthogonality from an I phase to a Q phase or vice versa.

(First Modification)

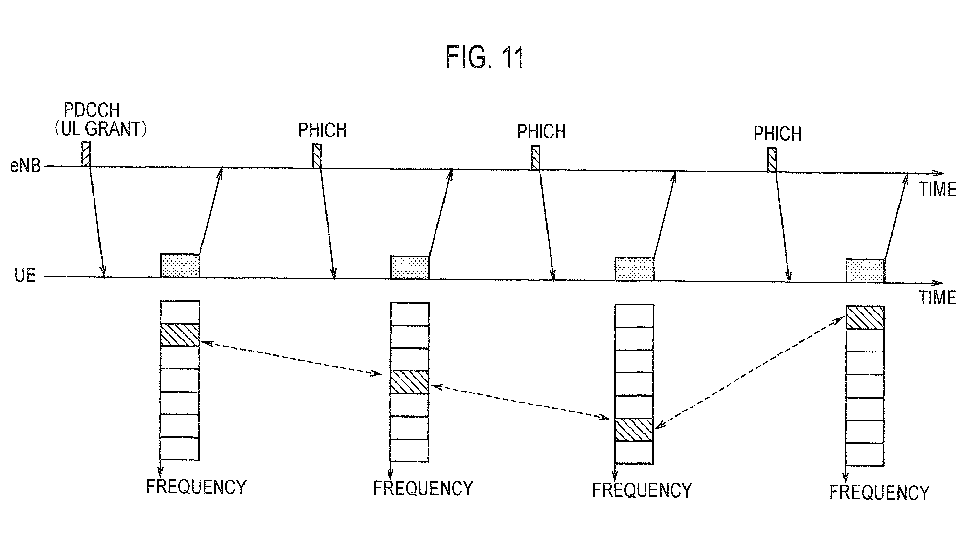

In a mobile communication system according to a first modification, as illustrated in Fig. 11, it may be possible to apply a "hopping technology" of changing PUSCH resources (i.e., resource blocks) used for retransmitting an uplink data signal in each retransmission timing.

As the hopping technology, there has been known a method for changing resource blocks used for retransmitting the uplink data signal according to a modification pattern determined in advance, a method for notifying a modification pattern of resource blocks, which are used for retransmitting the uplink data signal, at the time of transmitting an uplink scheduling signal "UL scheduling grant", and the like.

Thus, in each retransmission timing, the smallest resource block number of resource block numbers for identifying resource blocks assigned to PUSCH is changed.

In this regard, in the mobile communication system according to the first modification, the PHICH resource assignment unit 11B is configured to assign a second frequency direction resource and a second code direction resource to PHICH for transmitting a transmission acknowledgement signal for a retransmitted uplink data signal, based on resource block numbers for identifying resource blocks in PUSCH resources used for retransmitting the uplink data signal, that is, in consideration of the smallest resource block number of the resource block numbers for identifying the resource blocks assigned to the PUSCH changed for each transmission timing.

That is, when determining PHICH transmission resources at a corresponding sub-frame #n, the PHICH resource assignment unit 11B determines the assignment of the PHICH resources, in consideration of the smallest resource block number of resource block numbers for identifying resource blocks assigned to PUSCHs transmitted at sub-frames #n+16, #n+24 and the like, which are next retransmission timings, as well as only resource blocks assigned to PUSCH transmitted at a sub-frame #n+8.

If the above-mentioned modification pattern, that is, the number of times of retransmissions to be considered is increased, the probability that there occurs a contention of PHICH resources is reduced, but a process load in the radio base station eNB is increased.

Further, if the above-mentioned modification pattern is short, when the number of times for which an uplink data signal is retransmitted by the mobile station UE is increased, the probability that there occurs a contention of the PHICH resources is increased, but the process load in the radio base station eNB is reduced.

As described above, trade-off relation is established between the process load in the radio base station eNB and the probability that there occurs a contention of the PHICH resources.

The aspects of this embodiment as described above may be expressed as follows.

The first aspect of this embodiment is summarized as a radio base station eNB including: the PUSCH resource assignment unit 11A configured to assign a PUSCH resource (an uplink data signal channel resource) to PUSCH (an uplink data signal channel) for transmitting an uplink data signal of the mobile station UE; the PHICH resource assignment unit 11B configured to assign a first frequency direction resource and a first code direction resource to PHICH (a transmission acknowledgement signal channel) for transmitting a transmission acknowledgement signal for the uplink data signal based on resource block numbers (identification information of the uplink data signal channel resource) for identifying resource blocks in the PUSCH resource; and the PDCCH transmission unit 12 configured to notify, to the mobile station UE, a PUSCH resource (e.g., a sub-frame and a resource block), wherein when the usage situation of a code direction resource in the first frequency direction resource satisfies predetermined conditions, the PHICH resource assignment unit 11B is configured to change a frequency direction resource and a code direction resource assigned to the PHICH from the first frequency direction resource and the first code direction resource to a second frequency direction resource and a second code direction resource.

In the first aspect of this embodiment, the PDCCH transmission unit 12 may be configured to notify, to the mobile station UE, the second frequency direction resource and the second code direction resource.

In the first aspect of this embodiment, a frequency direction resource assignable to the PHICH may be a PHICH group (a transmission acknowledgement signal channel group) including a plurality of resource element groups, a code direction resource assignable to the PHTCH may be an orthogonal sequence (e.g., a Walsh Hadamard sequence) in the PHICH group, the PHICH resource assignment unit 11B may be configured to assign a first orthogonal sequence in a first PHICH group to the PHICH based on resource block numbers for identifying resource blocks in the PUSCH resource, and when the usage situation of the orthogonal sequence in the first PHICH group satisfies predetermined conditions, the PHICH resource assignment unit 11B may be configured to change the orthogonal sequence in the PHICH group assigned to the PHICH from the first orthogonal sequence in the first PHICH group to a second orthogonal sequence in a second PHICH group.

In the first aspect of this embodiment, when the number of used orthogonal sequences in the first PHICH group is equal to or more than a predetermined number, the PHICH resource assignment unit 11B may be configured to change the PHICH group and the orthogonal sequence assigned to the PHICH.

In the first aspect of this embodiment, when the first orthogonal sequence in the first PHICH group has been already assigned to another PHICH, the PHICH resource assignment unit 11B may be configured to change the PHICH group and the orthogonal sequence assigned to the PHICH.

In the first aspect of this embodiment, when a plurality of first orthogonal sequences exist in the first PHICH group to be changed, the PHICH resource assignment unit 11B may be configured to preferentially change the first orthogonal sequence in the first PHICH group having been already assigned to another PHICH.

In the first aspect of this embodiment, when a plurality of first orthogonal sequences exist in the first PHICH group to be changed, the PHICH resource assignment unit 11B may be configured to preferentially change the first orthogonal sequence in the first PHICH group with the largest number of used orthogonal sequences.

In the first aspect of this embodiment, the orthogonal sequence can be multiplexed in I and Q phases in the PHICH group, and when a plurality of first orthogonal sequences exist in the first PHICH group to be changed, the PHICH resource assignment unit 11B may be configured to preferentially change the first orthogonal sequence in the first PHICH group in which the orthogonal sequence has been multiplexed in the I and Q phases.

In the first aspect of this embodiment, when a plurality of first orthogonal sequences exist in the first PHICH group to be changed, the PHICH resource assignment unit may be configured to preferentially change the first orthogonal sequence in the first PHICH group with the largest total value of transmission power.

In the first aspect of this embodiment, the PHICH resource assignment unit 11B may be configured to set a PHICH group with the smallest total value of transmission power as a second PHICH group.

In the first aspect of this embodiment, when having changed the first orthogonal sequence in the first PHICH group, the PHICH resource assignment unit 11B may be configured to prevent a PHICH group, in which an orthogonal sequence is multiplexed in the I and Q phases, from being set as the second PHICH group.

In the first aspect of this embodiment, when having changed the first orthogonal sequence in the first PHICH group, the PHICH resource assignment unit 11B may be configured to prevent a PHICH group, in which there occurs a contention of orthogonal sequences having been already assigned to another PHICH, from being set as the second PHICH group.

In the first characteristic of this embodiment, the PHICH resource assignment unit 11B may be configured to assign a first frequency direction resource and a first code direction resource to PHICH for transmitting a transmission acknowledgement signal for a retransmitted uplink data signal, based on resource block numbers for identifying resource blocks in the PUSCH resource used for retransmitting the uplink data signal.

Note that operation of the above described radio base station eNB and the mobile station UE may be implemented by means of hardware, a software module executed by a processor, or a combination of both.

The software module may be provided in any type of storage medium such as an RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can read and write information from and to the storage medium. Also, the storage medium may be integrated into the processor. Also, the storage medium and the processor may be provided in an ASIC. The ASPIC may be provided in the radio base station eNB and the mobile station UE. Also, the storage medium and the processor may be provided in the radio base station eNB and the mobile station UE as a discrete component.

Hereinabove, the present invention has been described in detail using the above embodiment; however, it is apparent to those skilled in the art that the present invention is not limited to the embodiment described herein. Modifications and variations of the present invention can be made without departing from the spirit and scope of the present invention defined by the description of the scope of claims. Thus, what is described herein is for illustrative purpose, and has no intention whatsoever to limit the present invention.

**Claims**

1.  A radio base station comprising:

    an uplink data signal channel resource assignment unit configured to assign an uplink data signal channel resource to an uplink data signal channel for transmitting an uplink data signal of a mobile station;
    a transmission acknowledgement signal channel resource assignment unit configured to assign a first frequency direction resource and a first code direction resource to a transmission acknowledgement signal channel for transmitting a transmission acknowledgement signal for the uplink data signal, based on identification information of the uplink data signal channel resource; and
    a notification unit configured to notify, to the mobile station, the uplink data signal channel resource, wherein when a usage situation of a code direction resource in the first frequency direction resource satisfies predetermined conditions, the transmission acknowledgement signal channel resource assignment unit is configured to change a frequency direction resource and a code direction resource assigned to the transmission acknowledgement signal channel from the first frequency direction resource and the first code direction resource to a second frequency direction resource and a second code direction resource.

**2.** The radio base station according to claim 1, wherein
the notification unit is configured to notify, to the mobile station, the second frequency direction resource and the second code direction resource.

**3.** The radio base station according to claim 1 or 2, wherein a frequency direction resource assignable to the transmission acknowledgement signal channel is a transmission acknowledgement signal channel group including a plurality of resource element groups;
a code direction resource assignable to the transmission acknowledgement signal channel is an orthogonal sequence in the transmission acknowledgement signal channel group;
the transmission acknowledgement signal channel resource assignment unit is configured to assign a first orthogonal sequence in a first transmission acknowledgement signal channel group to the transmission acknowledgement signal channel, based on identification information of the uplink data signal channel resource; and
when a usage situation of an orthogonal sequence in the first transmission acknowledgement signal channel group satisfies predetermined conditions, the transmission acknowledgement signal channel resource assignment unit is configured to change an orthogonal sequence in a transmission acknowledgement signal channel group assigned to the transmission acknowledgement signal channel from a first orthogonal sequence in the first transmission acknowledgement signal channel group to a second orthogonal sequence in a second transmission acknowledgement signal channel group.

**4.** The radio base station according to claim 3, wherein when a number of used orthogonal sequences in the first transmission acknowledgement signal channel group is equal to or more than a predetermined number, the transmission acknowledgement signal channel resource assignment unit is configured to change a transmission acknowledgement signal channel group and an orthogonal sequence which are assigned to the transmission acknowledgement signal channel.

**5.** The radio base station according to claim 3, wherein when the first orthogonal sequence in the first transmission acknowledgement signal channel group has been already assigned to another transmission acknowledgement signal channel, the transmission acknowledgement signal channel resource assignment unit is configured to change a transmission acknowledgement signal channel group and an orthogonal sequence which are assigned to the transmission acknowledgement signal channel.

**6.** The radio base station according to claim 3, wherein when a plurality of first orthogonal sequences exist in a first transmission acknowledgement signal channel group to be changed, the transmission acknowledgement signal channel resource assignment unit is configured to preferentially change a first orthogonal sequence in a first transmission acknowledgement signal channel group having been already assigned to another transmission acknowledgement signal channel.

**7.** The radio base station according to claim 3, wherein when a plurality of first orthogonal sequences exist in a first transmission acknowledgement signal channel group to be changed, the transmission acknowledgement signal channel resource assignment unit is configured to preferentially change a first orthogonal sequence in a first transmission acknowledgement signal channel group with a largest number of used orthogonal sequences.

**8.** The radio base station according to claim 3, wherein the orthogonal sequence is multiplexed in I and Q phases in the transmission acknowledgement signal channel group, and
when a plurality of first orthogonal sequences exist in a first transmission acknowledgement signal channel group to be changed, the transmission acknowledgement signal channel resource assignment unit is configured to preferentially change a first orthogonal sequence in a first transmission acknowledgement signal channel group in which an orthogonal sequence has been multiplexed in I and Q phases.

**9.** The radio base station according to claim 3, wherein when a plurality of first orthogonal sequences exist in a first transmission acknowledgement signal channel group to be changed, the transmission acknowledgement signal channel resource assignment unit is configured to preferentially change a first orthogonal sequence in a first transmission acknowledgement signal channel group with a largest total value of transmission power.

**10.** The radio base station according to claim 3, wherein the transmission acknowledgement signal channel resource assignment unit is configured to set a transmission acknowledgement signal channel group with a smallest total value of transmission power as the second transmission acknowledgement signal channel group.

**11.** The radio base station according to claim 3, wherein when having changed the first orthogonal sequence in the first transmission acknowledgement signal channel group, the transmission acknowledgement signal channel resource assignment unit is configured to prevent a transmission acknowledgement signal channel group, in which an orthogonal sequence is multiplexed in I and Q phases, from being determined as the second transmission acknowledgement signal channel group.

**12.** The radio base station according to claim 3, wherein when having changed the first orthogonal sequence in the first transmission acknowledgement signal channel group, the transmission acknowledgement signal channel resource assignment unit is configured to prevent a transmission acknowledgement signal channel group, in which there occurs a contention to orthogonal sequences having been already assigned to another transmission acknowledgement signal channel, from being determined as the second transmission acknowledgement signal channel group.

**13.** The radio base station according to any one of claims 1 to 12, wherein
the transmission acknowledgement signal channel resource assignment unit is configured to assign the first frequency direction resource and the first code direction resource to a transmission acknowledgement signal channel for transmitting a transmission acknowledgement signal for a retransmitted uplink data signal, based on identification information of the uplink data signal channel resource used for retransmitting the uplink data signal.

# FIG. 1

RADIO BASE
STATION eNB

PDCCH
PHICH

PUSCH

MOBILE
STATION
UE

# FIG. 2

RADIO BASE
STATION eNB

PDCCH
TRANSMISSION
UNIT
12

PUSCH
RECEPTION
UNIT
13

PHICH
TRANSMISSION
UNIT
14

PUSCH
RESOURCE
ASSIGNMENT
UNIT
11A

PHICH
RESOURCE
ASSIGNMENT
UNIT
11B

# FIG. 3

(a)

CFI=3    CFI=2

SYSTEM BANDWIDTH

PDSCH    PDSCH    · · ·

ONE SUB-FRAME

→TIME

FREQUENCY

PHICH INTERVAL=1

▨ PCFICH
▧ PHICH
▦ PDCCH

(b)

CFI IS ALWAYS 3

SYSTEM BANDWIDTH

PDSCH    PDSCH    · · ·

ONE SUB-FRAME

PHICH INTERVAL=3

EP 2 408 250 A1

# FIG. 4

PHICH #GROUP 0    PHICH #GROUP 1    PHICH #GROUP 2

FREQUENCY

## FIG. 5

MULTIPLEX USING WALSH CODE (EACH PATTERN CORRESPONDS TO ONE PHICH SEQUENCE)

FREQUENCY

1 PHICH GROUP (REPEAT IN ORDER TO REALIZE FREQUENCY DIVERSITY)

*IN CASE OF PHICH INTERVAL = 1(NORMAL CP)

EP 2 408 250 A1

FIG. 6

# FIG. 7

PHICH GROUP

|  | #0 | #1 | #2 |
|---|---|---|---|
| #0 | **0** | 1 | 2 |
| #1 | **3** | 4 | 5 |
| #2 | 6 | **7** | 8 |
| #3 | 9 | 10 | 11 |
| #4 | **12** | 13 | 14 |
| #5 | 15 | **16** | 17 |
| #6 | 18 | 19 | 20 |
| #7 | 21 | 22 | 23 |

PHICH SEQUENCE

· LEFT DIAGRAM IS TWO DIMENSIONAL MATRIX OF PHICH SEQUENCE NUMBER × PHICH GROUP NUMBER
(AS AN EXAMPLE, PHICH GROUP NUMBER = 3 IS ASSUMED)

· PHICH RESOURCE TO EACH UE
✓ UE#1: MINIMUM RB INDEX = 0→PHICH GROUP #0, PHICH SEQUENCE #0
✓ UE#2: MINIMUM RB INDEX = 3→PHICH GROUP #0, PHICH SEQUENCE #1
✓ UE#3: MINIMUM RB INDEX = 7→PHICH GROUP #1, PHICH SEQUENCE #2
✓ UE#4: MINIMUM RB INDEX = 12→PHICH GROUP #0, PHICH SEQUENCE #4
✓ UE#5: MINIMUM RB INDEX = 16→PHICH GROUP #1, PHICH SEQUENCE #5

EP 2 408 250 A1

# FIG. 8

EXAMPLE OF PHICH RESOURCE TRANSITION BY CYCLIC SHIFT :
- ✓ MINIMUM RB INDEX = 0
    - WHEN CYCLIC SHIFT INDEX = 0→PHICH GROUP #0, PHICH SEQUENCE #0
    - WHEN CYCLIC SHIFT INDEX = 1→PHICH GROUP #1, PHICH SEQUENCE #1

- ✓ MINIMUM RB INDEX = 17
- ✓ WHEN CYCLIC SHIFT INDEX = 0→PHICH GROUP #2, PHICH SEQUENCE #5
- ✓ WHEN CYCLIC SHIFT INDEX = 2→PHICH GROUP #1, PHICH SEQUENCE #7

PHICH RESOURCE TRANSITION BY CYCLIC SHIFT IS ASSUMED TO BE USED AS A METHOD OF AVOIDING CONTENTION OF PHICH RESOURCES.
(FOR EXAMPLE, WHEN THE MINIMUM RB INDEX OF UE#1 = 0 AND THE MINIMUM RB INDEX OF UE#2 = 24, THE PHICH RESOURCES CONFLICT, AND THUS, IF PHICH RESOURCE TRANSITION BY CYCLIC SHIFT IS USED, THEN IT IS POSSIBLE TO AVOID CONTENTION OF PHICH RESOURCES)

PHICH GROUP

|  | #0 | #1 | #2 |
|---|---|---|---|
| #0 | 0 | 1 | 2 |
| #1 | 3 | 4 | 5 |
| #2 | 6 | 7 | 8 |
| #3 | 9 | 10 | 11 |
| #4 | 12 | 13 | 14 |
| #5 | 15 | 16 | 17 |
| #6 | 18 | 19 | 20 |
| #7 | 21 | 22 | 23 |

PHICH SEQUENCE

EP 2 408 250 A1

# FIG. 9

■ TIMING DIAGRAM

ROUND TRIP DELAY = 8

UL SCHEDULING GRANT (OR PHICH NACK)

eNB PROCESSING TIME

PHICH

eNB ——————————— TIME

$T_p$

$T_p$

UE ——————————— TIME

#n

#n+4

PUSCH

#n+8

UE PROCESSING TIME

UE RECOGNIZE THE PHICH INDEX BASED ON RB ASSIGNMENT IN UL GRANT    $T_P$: PROPAGATION DELAY

EP 2 408 250 A1

## FIG. 10

START

DETERMINE DEFAULT CYCLIC SHIFT AMOUNT
PHICH WHEN UL SCHEDULING GRANT IS TRANSMITTED
→ $n_{DMRS}=0$
PHICH WHEN INSTRUCTING RETRANSMISSION BY PHICH (NACK)
→ $n_{DMRS}$ = ($n_{DMRS}$ NOTIFIED BY IMMEDIATELY CLOSE UL SCHEDULING
GRANT OF IDENTICAL HARQ PROCESS)

S101

ASSIGN RB INDEX HAVING THE SMALLEST PUSCH AND PHICH
RESOURCE DETERMINED BY $n_{DMRS}$ TO EACH PHICH

S102

S103

CALCULATION OF AVERAGE
PHICH MULTIPLEX NUMBER

$$N_{tmp}=\left\lfloor \frac{N_{multiplexed}}{N_{PHICH}^{group}}\right\rfloor+1$$

$N_{PHICH}^{group}$ : NUMBER OF PHICH
GROUPS

$N_{multiplexed}$ : NUMBER OF PHICHS
AT THE SUB-FRAME

FLAG=0    S104

S105

IS EITHER CONDITION 1
OR CONDITION 2 SATISFIED IN RESOURCE
ASSIGNMENT CONTROL DETERMINATION
CONDITION?

NO

YES

FLAG=1    S106

S107

FLAG=1?    NO    STOP

YES

DETERMINE PHICH GROUP WITH THE HIGHEST
PRIORITY AS "PHICH GROUP TO BE CHANGED"    S108

DETERMINE PHICH GROUP OF CHANGE DESTINATION    S109

TRANSIT PHICH ONE BY ONE FROM PHICH GROUP TO BE
CHANGED TO PHICH GROUP OF CHANGE DESTINATION    S110

S111

IS EITHER
CONDITION 1 OR CONDITION 2
SATISFIED IN RESOURCE ASSIGNMENT CONTROL
TERMINATION DETERMINATION
CONDITION?

YES

NO

FLAG=0    S112

## FIG. 11

EP 2 408 250 A1

<table>
<tr><td colspan="2" align="center"><strong>INTERNATIONAL SEARCH REPORT</strong></td><td>International application No.<br>PCT/JP2010/053399</td></tr>
</table>

| A. CLASSIFICATION OF SUBJECT MATTER |
|---|
| *H04W72/12*(2009.01)i, *H04B1/707*(2006.01)i, *H04J11/00*(2006.01)i, *H04W72/04*(2009.01)i |

According to International Patent Classification (IPC) or to both national classification and IPC

| B. FIELDS SEARCHED |
|---|

Minimum documentation searched (classification system followed by classification symbols)
H04W72/12, H04B1/707, H04J11/00, H04W72/04

Documentation searched other than minimum documentation to the extent that such documents are included in the fields searched
| | | | |
|---|---|---|---|
| Jitsuyo Shinan Koho | 1922-1996 | Jitsuyo Shinan Toroku Koho | 1996-2010 |
| Kokai Jitsuyo Shinan Koho | 1971-2010 | Toroku Jitsuyo Shinan Koho | 1994-2010 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| A | Qualcomm Europe, Mapping of PHICH Resources from PUSCH and DM-RS Transmission, 3GPP TSG-RAN WG1 #53, R1-081961, 2008.05.05 [online], [retrieved on 2010-05-19]. Retrieved from the Internet <URL: http://www.3gpp.org/ftp/tsg_ran/WG1_RL1/TSGR1_53/Docs/R1-081961.zip> | 1-13 |
| A | 3GPP TS 36.211 V8.5.0, 2008.12, p.60-64 [online], [retrieved on 2010-05-19]. Retrieved from the Internet <URL: http://www.quintillion.co.jp/3GPP/Specs/36211-850.pdf> | 1-13 |

☐ Further documents are listed in the continuation of Box C.   ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>19 May, 2010 (19.05.10) | Date of mailing of the international search report<br>01 June, 2010 (01.06.10) |
|---|---|
| Name and mailing address of the ISA/<br>Japanese Patent Office | Authorized officer |
| Facsimile No. | Telephone No. |

Form PCT/ISA/210 (second sheet) (July 2009)